# EUROPEAN PATENT APPLICATION

(11) **EP 4 783 447 A1**
(43) Date of publication of application: **29.07.2026**
(21) Application number: 26153976.1
(22) Date of filing: 26.01.2026
(51) Int. Cl.: H02M 7/48, H02M 1/32

(54) **POWER CONVERTER**

(30) Priority: 27.01.2025 CN 202510127463
(71) Applicant: Huawei Technologies Co., Ltd., Shenzhen, Guangdong 518129 (CN)
(72) Inventor: LI, Junjie, Shenzhen, 518129 (CN); YU, Xinyu, Shenzhen, 518129 (CN); XIN, Kai, Shenzhen, 518129 (CN)
(74) Representative: Gill Jennings & Every LLP

(57) **Abstract**

This application provides a power converter, including a controller and three power conversion modules. The controller is configured to control switching transistors in the three power conversion modules to turn on/off, to implement power conversion between a direct current and three phase alternating currents. The controller is configured to: when an absolute value of a difference between valid voltage values of two phase alternating currents in the three phase alternating currents in a preset cycle exceeds a preset threshold, if a temperature of a power conversion module corresponding to one phase alternating current with a lower valid voltage value in the two phase alternating currents in the three phase alternating currents in the preset cycle exceeds a second temperature threshold corresponding to the power conversion module, reduce an output current of the phase, where the second temperature threshold is less than the first temperature threshold. When three-phase asymmetry occurs in a power grid, a safer control strategy of reducing an output current can be used to ensure safety of a component and enable a power converter to generate power stably.

## Description

### TECHNICAL FIELD

This application relates to the field of power electronics technologies, and in particular, to a power converter.

### BACKGROUND

When supplying power to a power grid normally, a grid-connected power converter, for example, a grid-connected inverter, performs feedback adjustment on power conversion of the grid-connected power converter based on a voltage, a current, a frequency, a power requirement, and the like of the power grid, to adapt to a power consumption requirement of the power grid and provide electric energy that meets a quality requirement of the power grid. However, when a fault occurs in the power grid, or when a power fault occurs in a line between the power converter and the power grid, if the power converter continues to adjust an operating state of the power converter based on an original feedback adjustment mode, a fault of the power converter may be caused. For example, when three-phase asymmetry occurs in the power grid, that is, when three phase alternating current voltages of the power grid are asymmetric, if the power converter continues to adjust the operating state of the power converter based on original feedback adjustment, a rapid increase in a loss of a power component in the power converter and a rapid increase in a temperature of the power component may be caused. As a result, a conventional overtemperature protection mechanism in the power converter cannot protect safety of the power component in a timely manner. Therefore, a power converter needs to be urgently designed to have a capability of handling an operating condition of three-phase asymmetry, to expand application scenarios of the power converter, enhance stability of the power converter, prolong a service life of the power converter, and improve an overall energy yield of the power converter throughout a full life cycle.

### SUMMARY

A power converter provided in this application can accurately identify an operating condition of three-phase asymmetry and effectively and safely handle the operating condition of three-phase asymmetry.

According to a first aspect, this application provides a power converter, including a controller and three power conversion modules. The controller is configured to control, through discontinuous pulse width modulation (DPWM, Discontinue Pulse Width Modulation), switching transistors in the three power conversion modules to turn on/off, to implement power conversion between a direct current and three phase alternating currents; and when an absolute value of a difference between valid voltage values of two phase alternating currents in the three phase alternating currents in a preset cycle does not exceed a preset threshold, if a temperature of the power conversion module corresponding to any phase alternating current in the three phase alternating currents exceeds a first temperature threshold corresponding to the power conversion module, reduce an output current of the phase; or when an absolute value of a difference between valid voltage values of two phase alternating currents in the three phase alternating currents in a preset cycle exceeds a preset threshold, if a temperature of the power conversion module corresponding to one phase alternating current with a lower valid voltage value in the two phase alternating currents in the three phase alternating currents in the preset cycle exceeds a second temperature threshold corresponding to the power conversion module, reduce an output current of the phase, where the second temperature threshold is less than the first temperature threshold.

Under continuous sinusoidal pulse width modulation (SPWM, Sinusoidal Pulse Width Modulation), the switching transistors in the three power conversion modules of the power converter are continuously turned on/off in an operating process. Under DPWM modulation, the switching transistors in the three power conversion modules of the power converter keep on/off in a period of time in an action cycle in the operating process, and a state of keeping on/off in the period of time is referred to as a clamping state, and this period of time is referred to as a clamping time. In addition, when temperatures of the three power conversion modules of the power converter reach a specific threshold, a derating strategy is triggered, for example, an output current is reduced, to prevent the power conversion modules from being damaged due to overheating. However, in an operating condition of three-phase asymmetry of a power grid, a conduction time of a part of the switching transistors in the power conversion modules becomes shorter, and more turning on/off is performed, so that more heat is more likely to be accumulated in a short time. It may be difficult to handle a large amount of heat accumulation in the short time by continuing to use the first temperature threshold as a trigger condition of the derating strategy, and an overheat risk of the switching transistors in the power conversion modules in the operating condition of three-phase asymmetry of the power grid cannot be avoided. Therefore, the temperature threshold for triggering the derating strategy needs to be changed when the operating condition of three-phase asymmetry of the power grid is identified, to improve safety of a component. In a normal operating condition of the power grid, the three phase alternating currents of the power grid are in a symmetric state, and waveforms of the three phase alternating currents are the same. Therefore, valid voltage values of all phase alternating currents are equal. The three-phase asymmetry state of the power grid is found in a timely manner by comparing an absolute value of a difference between valid voltage values of any two phase alternating currents in the three phase alternating currents in the preset cycle with the preset threshold, and the second temperature threshold with a lower value is used, so that when a fault, for example, three-phase asymmetry occurs in the power grid, a safer control strategy of reducing the output current can be used, and the derating strategy can be triggered when the power conversion module is at a lower temperature, to provide a safety margin. This prevents the power conversion module from overheating caused by untimely derating due to rapid heat accumulation in the operating condition of three-phase asymmetry, thereby ensuring safety of the component, ensuring that the power converter smoothly passes through a period of three-phase asymmetry of the power grid, and improving an overall energy yield of the power converter throughout a full life cycle.

It should be noted that the first temperature threshold and the second temperature threshold may be preset fixed values, or may be values adjusted in real time based on an operating condition of the power converter.

It should be noted that, similar to the foregoing implementation, in another possible implementation, when three-phase asymmetry is detected, a temperature of a currently detected power conversion module is raised, for example, a corresponding variation is superimposed, and then the raised temperature is compared with a fixed temperature threshold (for example, a temperature threshold set in the normal operating condition). If the raised temperature exceeds the temperature threshold, a current of the phase is reduced, which may also achieve effect the same as that of lowering the second temperature threshold.

In an implementation, the first temperature threshold is a fixed value, and the second temperature threshold is a variable value. In other words, in this case, the second temperature threshold needs to be a variable value, and is adjusted to a corresponding lower value according to a specific situation (the difference between the valid voltage values). A larger absolute value of the difference between the valid voltage values of the two phase alternating currents in the three phase alternating currents in the preset cycle indicates a larger difference between the first temperature threshold and the second temperature threshold.

A larger absolute value of the difference between the valid voltage values of the two phase alternating currents in the preset cycle indicates more serious three-phase asymmetry of the power grid, and also more serious temperature raising of the power conversion module. In this case, the value of the second temperature threshold is lower, so that the power conversion module can be better prevented from overheating in advance, thereby ensuring safety of the component, ensuring that the power converter smoothly passes through a period of three-phase asymmetry of the power grid, and improving an overall energy yield of the power converter throughout a full life cycle. In addition, when no three-phase asymmetry occurs, the operating condition of the power converter is stable, and a preset fixed value determined based on empirical data may be used to ensure safety of the power conversion module. Compared with the change value adjusted in real time, this can save computing power.

In an implementation, both the first temperature threshold and the second temperature threshold are fixed values. In this case, the first temperature threshold and the second temperature threshold are two preset thresholds, and the two operating conditions of the power grid: three-phase symmetry and three-phase asymmetry one-to-one correspond to the temperature thresholds. In this case, corresponding thresholds may be directly adjusted to in corresponding operating conditions.

In an implementation, the two phase alternating currents in the three phase alternating currents are one phase alternating current with a maximum valid voltage value and one phase alternating current with a minimum valid voltage value in the preset cycle.

The operating condition of three-phase asymmetry of the power grid is first reflected by a difference between a valid voltage value of the one phase alternating current with the maximum valid voltage value and a valid voltage value of the one phase alternating current with the minimum valid voltage value. Therefore, the valid voltage value of the one phase alternating current with the maximum valid voltage value and the valid voltage value of the one phase alternating current with the minimum valid voltage value are directly compared, to avoid an invalid comparison between an intermediate value and a maximum value or a minimum value, so that whether three-phase asymmetry occurs in the power grid can be more quickly determined, and computing power is saved.

In an implementation, the preset cycle is any positive integer multiple cycle of a shortest time cycle covering half a cycle of each phase alternating current in the three phase alternating currents.

In the normal operating condition of the power grid, the three phase alternating currents of the power grid are in a symmetric state, waveforms of the three phase alternating currents are the same, and valid voltage values of all phase alternating currents are equal. However, a positive half cycle and a negative half cycle of each phase alternating current in the three phase alternating currents are symmetrically distributed. Therefore, valid voltage values of positive half cycles or negative half cycles between any two phase alternating currents in the three phase alternating currents are also equal. However, when the three phase alternating currents of the power grid are asymmetric, valid voltage values of positive half cycles or negative half cycles between two phase alternating currents in the three phase alternating currents are greatly different. Therefore, the valid voltage values of the positive half cycles or the negative half cycles between all phases of the three phase alternating currents are directly compared. For example, half cycles that are closest and that are of all phase alternating currents in the three phase alternating currents are used as comparison objects, and comparison can be completed in a shortest time cycle, so that whether three-phase asymmetry occurs in the power grid can be more quickly determined, and computing power is saved. Similarly, a cycle that is an integer multiple of the positive half cycle or the negative half cycle, for example, a cycle that is twice the positive half cycle or the negative half cycle, may also be a complete fundamental cycle, and a valid voltage value of the entire fundamental cycle may also be used to determine whether three-phase asymmetry occurs.

In an implementation, that the controller is further configured to: when the absolute value of the difference between the valid voltage values of the two phase alternating currents in the three phase alternating currents in the preset cycle exceeds the preset threshold, if the temperature of the power conversion module corresponding to the one phase alternating current with the lower valid voltage value of the two phase alternating currents in the preset cycle exceeds the second temperature threshold corresponding to the power conversion module, reduce the output current of the phase is specifically: after a negative-sequence voltage component of the three phase alternating currents is greater than a preset component threshold, the controller is configured to: when the absolute value of the difference between the valid voltage values of the two phase alternating currents in the three phase alternating currents in the preset cycle exceeds the preset threshold, if the temperature of the power conversion module corresponding to the one phase alternating current with the lower valid voltage value of the two phase alternating currents in the preset cycle exceeds the second temperature threshold corresponding to the power conversion module, reduce the output current of the phase.

When the operating condition of asymmetry occurs, the negative-sequence voltage component usually increases. A prerequisite is that the negative-sequence voltage component exceeds a specific threshold, to ensure that related determining and control are performed only after the operating condition of asymmetry may occur, so that the controller can be prevented from performing unnecessary detection, and computing power is saved.

According to a second aspect, this application provides another power converter, including a controller and three power conversion modules. The controller is configured to control, in a discontinuous pulse width modulation DPWM scheme, switching transistors in the three power conversion modules to turn on/off, to implement power conversion between a direct current and three phase alternating currents; and when an absolute value of a difference between duration in which switching transistors in the power conversion modules corresponding to two phase alternating currents in the three phase alternating currents keep in a clamping state in a preset cycle does not exceed a preset time threshold, if a temperature of a power conversion module corresponding to any phase alternating current in the three phase alternating currents exceeds a first temperature threshold corresponding to the power conversion module, reduce an output current of the phase; or when an absolute value of a difference between duration in which switching transistors in the power conversion modules corresponding to two phase alternating currents in the three phase alternating currents keep in a clamping state in a preset cycle exceeds a preset time threshold, if a temperature of the power conversion module that is in the power conversion modules corresponding to the two phase alternating currents in the three phase alternating currents and whose switching transistor keeps in a clamping state for shorter duration in the preset cycle exceeds a second temperature threshold corresponding to the power conversion module, reduce an output current of the phase, where the second temperature threshold is less than the first temperature threshold.

In the DPWM modulation scheme, the power conversion module is in a clamping state for a period of time in both a positive half cycle and a negative half cycle, that is, the switching transistor in the power conversion module keeps on/off. In this period of time, the switching transistor is not turned on/off, and no on/off loss is generated, so that the power conversion module does not continue to accumulate heat in this period of time. In addition, in the DPWM modulation scheme, larger valid voltage values of the three phase alternating currents in the half cycles indicates longer clamping times of corresponding power conversion modules in the half cycles, and a lower on/off loss. Therefore, the valid voltage values of the three phase alternating currents are determined based on the clamping times of the power conversion modules, and a derating strategy is correspondingly adjusted, so that whether three-phase asymmetry occurs in the power grid can be more quickly determined, and computing power is saved.

In an implementation, the first temperature threshold is a fixed value, the second temperature threshold is a variable value, and a larger absolute value of the difference between the duration in which the switching transistors in the power conversion modules corresponding to the two phase alternating currents in the three phase alternating currents keep in the clamping state in the preset cycle indicates a larger difference between the first temperature threshold and the second temperature threshold.

In an implementation, the power conversion modules corresponding to the two phase alternating currents in the three phase alternating currents are one power conversion module whose switching transistor keeps in a clamping state for longest duration and one power conversion module whose switching transistor keeps in a clamping state for shortest duration in the preset cycle.

According to a third aspect, this application provides another power converter, including a controller and three power conversion modules. The controller is configured to control, in a DPWM modulation scheme, switching transistors in the three power conversion modules to turn on/off, to implement power conversion between a direct current and three phase alternating currents; and the controller is further configured to: when an absolute value of a difference between a valid voltage value of one phase alternating current in the three phase alternating currents in a preset cycle and a reference value does not exceed a preset threshold, if a temperature of the power conversion module corresponding to the one phase alternating current in the three phase alternating currents exceeds a first temperature threshold corresponding to the power conversion module, reduce an output current of the phase; or the controller is further configured to: when an absolute value of a difference between a valid voltage value of one phase alternating current in the three phase alternating currents in a preset cycle and a reference value exceeds a preset threshold, if a temperature of the power conversion module corresponding to the one phase alternating current in the three phase alternating currents exceeds a second temperature threshold corresponding to the power conversion module, reduce an output current of the phase, where the second temperature threshold is less than the first temperature threshold.

In a normal operating condition of a power grid, the three phase alternating currents of the power grid are in a symmetric state, and valid voltage values of the three phase alternating currents basically remains unchanged. Therefore, a reference value may be preset, and the three-phase asymmetry state of the power grid is found in a timely manner by comparing the absolute value of the difference between the valid voltage value of the any phase alternating current in the three phase alternating currents in the preset cycle and the reference value with the preset threshold, and the second temperature threshold with a lower value is used as a condition for triggering a derating output strategy of reducing the output current, so that when three-phase asymmetry occurs in the power grid, a safer control strategy of reducing the output current is used. This prevents the power conversion module from overheating, thereby ensuring safety of the component, ensuring that the power converter smoothly passes through a period of three-phase asymmetry of the power grid, and improving an overall energy yield of the power converter throughout a full life cycle.

In an implementation, the first temperature threshold is a fixed value, the second temperature threshold is a variable value, and a larger absolute value of the difference between the valid voltage value of the one phase alternating current in the three phase alternating currents in the preset cycle and the reference value indicates a larger difference between the first temperature threshold and the second temperature threshold.

A larger absolute value of a difference between a valid voltage value of one phase alternating current in the three phase alternating currents and the reference value indicates more serious three-phase asymmetry of the power grid, and also more serious temperature raising of the power conversion module. In this case, the value of the second temperature threshold is lower, so that the power conversion module can be better prevented from overheating in advance, thereby ensuring safety of the component, ensuring that the power converter smoothly passes through a period of three-phase asymmetry of the power grid, and improving an overall energy yield of the power converter throughout a full life cycle.

In an implementation, both the first temperature threshold and the second temperature threshold are fixed values.

In an implementation, the reference value is an average value of valid voltage values of the three phase alternating currents.

In some cases, voltages of the power grid may change in a balanced manner, which does not cause three-phase asymmetry of the power grid, but may cause the valid voltage values of the three phase alternating currents output by the power converter change. Therefore, using the average value of the valid voltage values of the three phase alternating currents as the reference value can effectively reduce misjudgment of the operating condition of three-phase asymmetry.

According to a fourth aspect, this application provides another power converter, including a controller and three power conversion modules. The controller is configured to control, in a discontinuous pulse width modulation DPWM scheme, switching transistors in the three power conversion modules to turn on/off, to implement power conversion between a direct current and three phase alternating currents; and when an absolute value of a difference between duration in which a switching transistor in the power conversion module corresponding to any phase alternating current in the three phase alternating currents keeps in a clamping state in a preset cycle and a time reference value does not exceed a preset time threshold, if a temperature of the power conversion module corresponding to the any phase alternating current in the three phase alternating currents exceeds a first temperature threshold corresponding to the power conversion module, reduce an output current of the phase; or when an absolute value of a difference between duration in which a switching transistor in the power conversion module corresponding to any phase alternating current in the three phase alternating currents keeps in a clamping state in a preset cycle and a time reference value exceeds a preset time threshold, if a temperature of the power conversion module corresponding to the any phase alternating current exceeds a second temperature threshold corresponding to the power conversion module, reduce an output current of the phase, where the second temperature threshold is less than the first temperature threshold.

In an implementation, the first temperature threshold is a fixed value, the second temperature threshold is a variable value, and a larger absolute value of the difference between the duration in which the switching transistor in the power conversion module corresponding to the any phase alternating current in the three phase alternating currents keeps in the clamping state in the preset cycle and the time reference value indicates a larger difference between the first temperature threshold and the second temperature threshold.

It should be understood that mutual reference may be made to the implementations and beneficial effect of the foregoing four aspects of this application.

### BRIEF DESCRIPTION OF DRAWINGS

FIG. 1 is a diagram of an application scenario of a power converter according to this application;
FIG. 2 is a diagram of an operating condition of three-phase voltage asymmetry of a power grid according to this application;
FIG. 3 is a diagram of three phase modulated waves in an operating condition of voltage asymmetry of a power grid according to this application;
FIG. 4 is a diagram of an operating condition of three-phase voltage asymmetry of a power grid according to this application;
FIG. 5 is a diagram of a control process of a power converter according to this application;
FIG. 6 is a diagram of a control process of a power converter according to this application;
FIG. 7 is a diagram of a control process of a power converter according to this application; and
FIG. 8 is a diagram of a control process of a power converter according to this application.

### DESCRIPTION OF EMBODIMENTS

To make the objectives, features, and advantages of this application more comprehensible, this application is further illustrated in detail in the following with reference to the accompanying drawings and specific implementations.

"One embodiment" or "embodiment" herein refers to a specific feature, structure, or characteristic that may be included in at least one implementation of this application. "In one embodiment" appearing in different places in this specification does not refer to a same embodiment, and is not a separate or selective embodiment that is mutually exclusive with another embodiment. Unless otherwise specified, in this specification, the words "connect", "connecting", and "connection" that indicate an electrical connection all indicate a direct or indirect electrical connection.

If used, the following terms "first", "second", and the like are merely for a purpose of description, and cannot be understood as an indication or an implication of relative importance or an implicit indication of a quantity of indicated technical features. Therefore, a feature limited by "first", "second", or the like may explicitly or implicitly include one or more features. In descriptions of this application, "a plurality of" means two or more, unless otherwise specified.

As a grid-connected capacity of renewable energy increases, there are more power conversion devices, such as an inverter, in a power system. A large quantity of renewable energy power plants output electric energy to a large power grid through long-distance power transmission lines. Due to existence of a three-phase impedance difference between a power transmission device and the lines or three-phase asymmetry loads, three phase voltages of the power grid may be asymmetric at a remote end. When the three phase voltages of the power grid are asymmetric, safety of a power-consuming device needs to be considered.

The technical solutions provided in embodiments of this application may be applicable to different application scenarios, and in particular, are applicable to a photovoltaic power generation or energy storage power supply scenario, for example, a distributed industrial and commercial power plant or a large ground power plant.

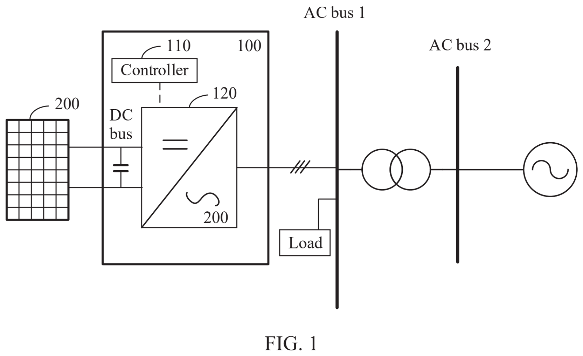

FIG. 1 is a diagram of an application scenario of a photovoltaic system according to an embodiment of this application. Each photovoltaic system provided in this embodiment of this application includes one photovoltaic string 200. The photovoltaic string 200 may be one or more strings, and one photovoltaic string is obtained by connecting one or more photovoltaic panels in series or in parallel. The photovoltaic string 200 is configured to convert received light energy into electric energy in a direct current form in a light condition, and transmit the electric energy to an inverter 100. The inverter 100 is configured to convert the direct current input by the photovoltaic string 200 into an alternating current, and output the alternating current to a load. It should be understood that, in a broad sense, the load may be a power grid, or may be a power-consuming device, an energy storage device, or the like. The inverter 100 provided in this embodiment of this application may be separately connected to the power-consuming device, the energy storage device, and the like, or may be separately connected to the power grid, or may be connected to all of the power grid, the power-consuming device, the energy storage device, and the like. In an application scenario of the inverter 100 shown in FIG. 1, an output end of the inverter 100 is directly connected to a load, and is connected to a transformer through an alternating current bus AC bus 1, is connected to an alternating current bus AC bus 2 after being boosted by using the transformer, and then is connected to a large power grid.

In an embodiment, as shown in FIG. 1, an inverter circuit 120 in the inverter 100 is directly connected to the photovoltaic string 200 through a direct current bus DC bus. This is a single-stage architecture inverter 100. A controller 110 in the inverter 100 controls the inverter circuit 120 to convert a direct current provided by the photovoltaic string 200 into an alternating current and output the alternating current to a back end. In actual application, the inverter 100 may alternatively be a dual-stage architecture inverter. This is not limited in the technical solution in embodiments of this application. In addition, the inverter 100 may be replaced with a power conversion system, and the photovoltaic string 200 is replaced with the energy storage device, to form an energy storage power supply system.

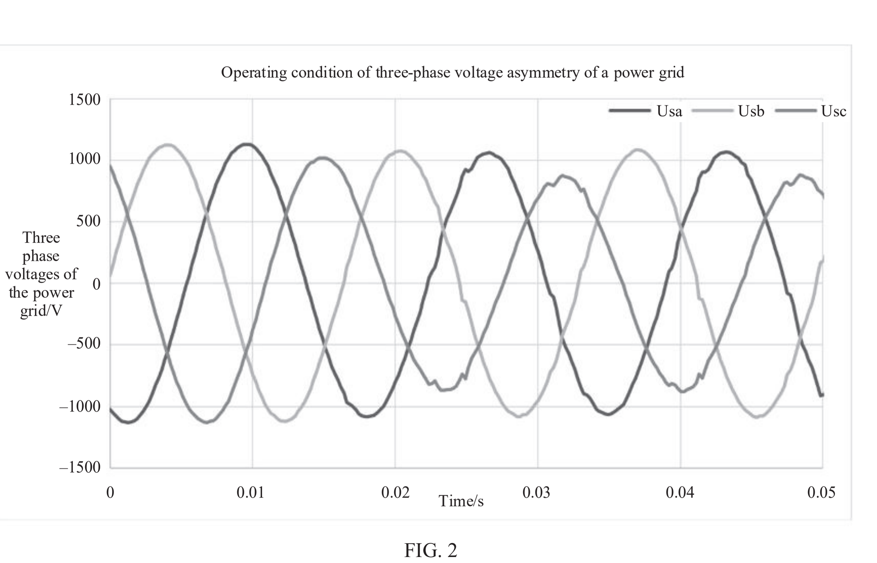

A photovoltaic power plant usually transmits electric energy of the power plant to the power grid through long-distance power transmission. At a grid-connected port of the inverter, there is an operating scenario in which three phase voltages are asymmetric. As shown in FIG. 2, voltage amplitudes of the three phase voltages are not equal. When the three phase voltages are asymmetric, because the inverter performs feedback adjustment and gridconnection control with the voltages of the power grid, three-phase asymmetry of three phase modulated waves of the inverter also occurs with the voltages of the power grid. FIG. 2 is a waveform diagram of modulated waves in a DPWM modulation scheme, and the three phase modulated waves have unequal clamping times.

It should be understood that, in the DPWM modulation scheme, three power conversion modules in the inverter are in a clamping state for a period of time in both positive half cycles and negative half cycles. This period of time corresponds to a period of time during which magnitudes of the modulated waves are 1 or -1 shown in FIG. 2, that is, a clamping time. In this period of time, switching transistors in the power conversion modules keep on/off, the switching transistors are not turned on/off and are in the clamping state, and no on/off loss is generated, so that the power conversion module does not continue to accumulate heat in this period of time. In the operating condition of voltage asymmetry of the power grid, a clamping time of a power conversion module may be greatly compressed, and consequently heat accumulation is accelerated sharply compared with that in a normal operating condition. If a derating protection strategy of the power conversion module is designed based on a heat loss of three phase bridge arm switching transistors in an original operating condition of three phase voltage symmetry, safety of the switching transistor cannot be effectively protected. It should be noted that, derating means that the power converter reduces an output current of the power converter in an operating condition, to reduce a power loss of the power conversion module, so as to prevent the power conversion module from being damaged due to overheating.

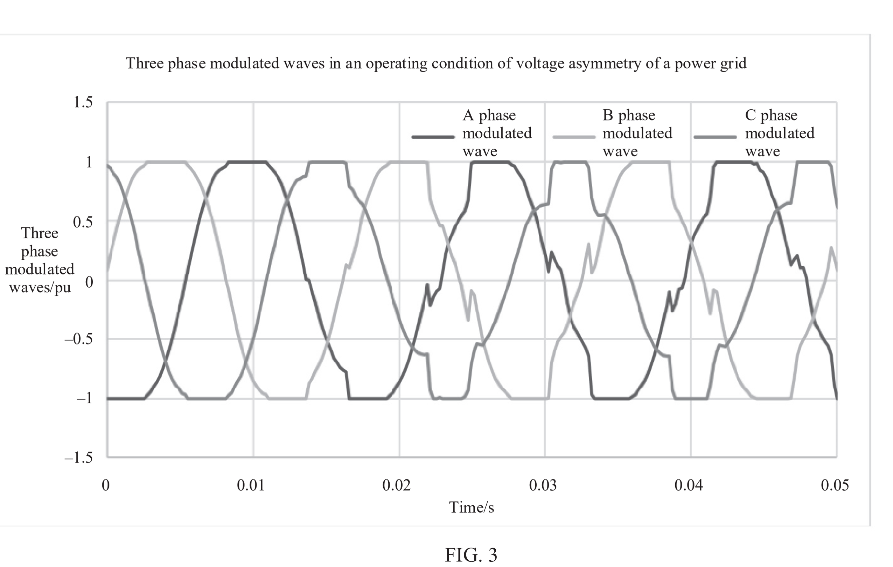

Still refer to FIG. 1. In an embodiment, the inverter circuit 120 in the inverter 100 includes three power conversion modules (not shown in the figure). The controller 110 is configured to control, in a DPWM modulation scheme, switching transistors in the three power conversion modules to turn on/off, to implement power conversion between a direct current and three phase alternating currents. In the words, the inverter circuit 120 is a three-phase inverter circuit, the three power conversion modules correspond to three phase inverter bridge arms, each phase inverter bridge arm may convert the direct current into an alternating current through power conversion, and three phase output currents finally form the three phase alternating currents with a phase difference of 120° and an equal amplitude. To prevent the power conversion module from being damaged due to overheating, a first temperature threshold is preset. When a temperature of any power conversion module in the three power conversion modules exceeds a first temperature threshold corresponding to the power conversion module, the controller 110 reduces an output current of the phase. In addition, the controller 110 is further configured to: when an absolute value of a difference between valid voltage values of two phase alternating currents in the three phase alternating currents of the power grid in a preset cycle exceeds a preset threshold, if a temperature of a power conversion module corresponding to one phase alternating current with a lower valid voltage value in the two phase alternating currents in the three phase alternating currents in the preset cycle exceeds a second temperature threshold corresponding to the power conversion module, reduce an output current of the phase. The foregoing first temperature threshold is greater than the second temperature threshold. For example, refer to FIG. 2 and FIG. 3 of the accompanying drawings of the specification. In the operating condition of three-phase voltage asymmetry of the power grid, an amplitude of one phase voltage decreases, that is, a voltage amplitude of a C phase voltage Use shown in FIG. 2 decreases, and a valid voltage value of the C phase voltage in a positive half cycle or a negative half cycle decreases. Correspondingly, a clamping time of a C phase modulated wave, that is, a time during which a magnitude of the C phase modulated wave is equal to 1 or -1 shown in FIG. 3 is shortened, a time during which a switching transistor in a power conversion module corresponding to the C phase keeps on/off is shortened, an on/off loss is increased, and heat accumulation is accelerated. Therefore, whether three-phase voltage asymmetry occurs in the power grid can be effectively determined based on a comparison result between an absolute value of a difference between valid voltage values of two phase voltages in a preset cycle and a preset threshold. In this case, the second temperature threshold with a lower value needs to be used to perform derating processing on the power conversion module in advance and in a timely manner, to prevent the power conversion module from overheating, so that the power conversion module can safely pass through a period of three-phase asymmetry of the power grid. In an embodiment, a larger absolute value of the difference between the valid voltage values of the two phase alternating currents in the three phase alternating currents in the preset cycle indicates a larger difference between the first temperature threshold and the second temperature threshold.

It may be understood that, a larger absolute value of the difference between the valid voltage values of the two phase alternating currents in the preset cycle indicates more serious three-phase asymmetry of the power grid, a shorter time during which a magnitude of a modulated wave corresponding to one phase with a smaller valid voltage value is equal to 1 or -1, a shorter time during which a switching transistor in a corresponding power conversion module keeps on/off, and more serious temperature raising of the power conversion module. In this case, a function relationship may be established between the absolute value of the difference between the valid voltage values of the two phase alternating currents in the preset cycle and a difference between the first temperature threshold and the second temperature threshold. A larger absolute value of the former difference indicates a larger latter difference, that is, on the premise that the first temperature threshold is determined, the value of the second temperature threshold is smaller. The second temperature threshold with a lower value is used, so that the power conversion module can be better prevented from overheating in advance, thereby ensuring safety of the component, ensuring that the power converter smoothly passes through a period of three-phase asymmetry of the power grid, and improving an overall energy yield of the power converter throughout a full life cycle. For example, an absolute value of a difference between valid voltage values of phase-A and phase-B alternating currents in the three phase alternating currents in the preset cycle is used as an independent variable X, and the difference between the first temperature threshold and the second temperature threshold is used as a dependent variable Y, where Y=aX+b, and a and b are empirical coefficients whose values are positive. When X increases, Y also increases, that is, the second temperature threshold is smaller relative to the first temperature threshold. It should be understood that a person skilled in the art may design and adjust the empirical coefficients a and b based on a specific application situation. a and b may be fixed coefficients, or may be variable coefficients related to independent variables. This is not specifically limited in embodiments of this application.

The foregoing embodiment may also be implemented in the following manner. A variable temperature threshold is preset inside the controller 110. When it is determined that three-phase balance occurs, the temperature threshold is high. For example, if a value of the first temperature threshold is used, derating is triggered when a temperature of the power conversion module exceeds the first temperature threshold. When three-phase asymmetry occurs, the temperature threshold is low. For example, if a value of the second temperature threshold is used, derating is triggered when a temperature of the power conversion module exceeds the second temperature threshold. In other words, when three-phase asymmetry occurs, the controller 110 reduces the temperature threshold, and a larger absolute value of the difference between the valid voltage values of the two phase alternating currents in the preset cycle indicates a larger reduction amplitude of the temperature threshold. A constant temperature threshold is preset inside the controller 110. When it is determined that three-phase balance occurs, the controller 110 directly uses a temperature that is of the power conversion module and that is detected by a temperature sensor. If the temperature exceeds the temperature threshold, derating is triggered. When three-phase asymmetry occurs, the controller 110 uses a superimposed value obtained by superimposing a temperature that is of the power conversion module and that is detected by a temperature sensor and a value as a temperature of the power conversion module. If the superimposed value obtained by superimposing the temperature that is of the power conversion module and that is detected by the temperature sensor and the value exceeds the temperature threshold, derating is triggered. A larger absolute value of the difference between the valid voltage values of the two phase alternating currents in the preset cycle indicates a larger superimposed value. It should be noted that the first temperature threshold may be a variable threshold determined in real time based on an operating condition of the power converter, or may be a fixed value.

In an embodiment, the first temperature threshold is a fixed value, and the second temperature threshold is a variable value. When the three phase alternating currents are in a balanced state, the operating condition of the inverter 100 is stable, and using a fixed value as the first temperature threshold can save computing power. It should be understood that the power conversion modules share one first temperature threshold, or may set respective first temperature thresholds.

In an embodiment, in this case, the first temperature threshold and the second temperature threshold are two preset thresholds, and the two operating conditions of the power grid: three-phase symmetry and three-phase asymmetry one-to-one correspond to the temperature thresholds. In this case, corresponding thresholds may be directly adjusted to in corresponding operating conditions.

It should be noted that the two phase alternating currents may be alternating currents of any two phases in phases A, B, and C, and whether the three phase alternating currents are balanced may be determined by using a difference between a maximum value and a minimum value in valid values of alternating currents of the phases A, B, and C, or may be determined by using a maximum value and an intermediate value, or may be determined by using an intermediate value and a minimum value. This is not limited in embodiments of this application.

In an embodiment, the two phase alternating currents in the three phase alternating currents are one phase alternating current with a maximum valid voltage value and one phase alternating current with a minimum valid voltage value in the preset cycle.

It may be understood that, when the absolute value of the difference between the valid voltage values of the two phase alternating currents in the three phase alternating currents in the preset cycle is used as a comparison object to compare with the preset threshold to determine whether three-phase asymmetry occurs, the valid voltage value of the one phase alternating current with the maximum valid voltage value and the valid voltage value of the one phase alternating current with the minimum valid voltage value are directly compared, to effectively reduce a quantity of comparisons, so that whether three-phase asymmetry occurs in the power grid can be more quickly determined, and computing power is saved. In an embodiment, the preset cycle is any positive integer multiple cycle of a shortest time cycle covering half a cycle of each phase alternating current in the three phase alternating currents.

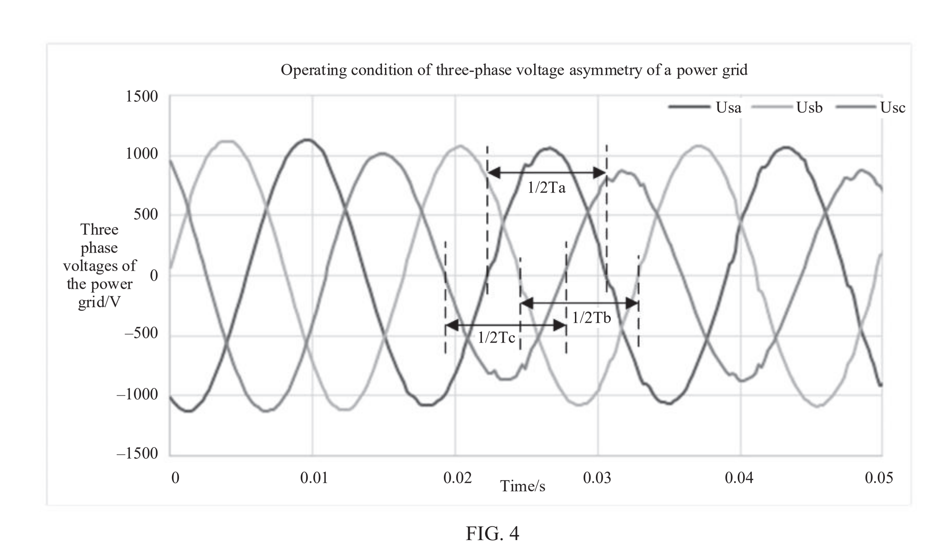

It may be understood that, in the normal operating condition of the power grid, the three phase alternating currents of the power grid are in a symmetric state, waveforms of the three phase alternating currents are the same, and valid voltage values of all phase alternating currents are equal. However, a positive half cycle and a negative half cycle of each phase alternating current in the three phase alternating currents are symmetrically distributed. Therefore, valid voltage values of positive half cycles or negative half cycles between any two phase alternating currents in the three phase alternating currents are also equal. The valid voltage values of the positive half cycles or the negative half cycles between all phases of the three phase alternating currents are directly compared, so that whether three-phase asymmetry occurs in the power grid can be more quickly determined, and computing power is saved. For example, refer to FIG. 4. When phases of the phase A, the phase B, and the phase C differ by 120° in sequence, and displacement exists between the phases, three closest half cycles between three phase voltages are selected as comparison objects, that is, closest half cycles of all phase alternating currents in the three phase alternating currents are used as comparison objects, for example, a valid voltage value of a positive half cycle 1/2Ta of the phase A, a valid voltage value of a negative half cycle 1/2Tb of the phase B, and a valid voltage value of a negative half cycle 1/2Tc of the phase C are used as comparison objects, where the positive half cycle 1/2Ta of the phase A, the negative half cycle 1/2Tb of the phase B, and the negative half cycle 1/2Tc of the phase C are closest. The valid values of all half cycles of the three phase voltages can be obtained in a shortest time, to determine whether three-phase asymmetry occurs in the power grid, which is timely and efficiently and can save computing power. After this, data of the valid values of the half cycles of all phases are updated in sequence, that is, a difference between an absolute value of a difference between valid values of any two phase voltages in the three phase voltages and the preset threshold may be determined based on latest data, to determine whether three-phase asymmetry occurs in the power grid. Similarly, a cycle that is an integer multiple of the positive half cycle or the negative half cycle, for example, a cycle that is twice the positive half cycle or the negative half cycle, may also be a complete fundamental cycle, and a valid voltage value of the entire fundamental cycle may also be used to determine whether three-phase asymmetry occurs. For another example, a cycle that is three times the positive half cycle is 1.5 times the fundamental cycle, and a valid voltage value of the 1.5 times the fundamental cycle may also be used to determine whether three-phase asymmetry occurs.

Still refer to FIG. 3. FIG. 3 shows modulated waves sent by the controller 110 to the inverter circuit 120 in the DPWM modulation scheme. A magnitude of a modulated wave signal is equal to 1 or -1 for a period of time in each half cycle, so that switching transistors in the three power conversion modules in the inverter 100 keep in a clamping state. It can be learned that a shorter time during which the magnitude of the modulated wave signal is equal to 1 or -1 indicates a smaller area enclosed by a modulation signal curve and a 0 axis, that is, a smaller valid voltage value.

In an embodiment, the manner of determining whether the absolute value of the difference between the valid voltage values of the two phase alternating currents in the three phase alternating currents in the preset cycle exceeds the preset threshold described in the foregoing embodiment may be specifically implemented in the following manner: When an absolute value of a difference between duration in which switching transistors in power conversion modules corresponding to two phase alternating currents in the three phase alternating currents keep in a clamping state in a preset cycle exceeds a preset time threshold, it is considered that the absolute value of the difference between the valid voltage values of the two phase alternating currents in the three phase alternating currents in the preset cycle exceeds the preset threshold.

It should be understood that, when specifically controlling the three power conversion modules, the controller 110 may determine, based on related data in the foregoing embodiments, whether three-phase asymmetry occurs by using methods such as linear fitting calculation, table lookup interpolation calculation, and a positive correlation function relationship, and then perform corresponding control on the three power conversion modules.

In an embodiment, only after a negative-sequence voltage component of the three phase alternating currents is greater than a preset component threshold, the controller 110 starts to determine whether three-phase asymmetry occurs, so as to perform corresponding control. When the operating condition of asymmetry occurs, the negative-sequence voltage component usually increases. A prerequisite is that the negative-sequence voltage component exceeds a specific threshold, to ensure that related determining and control are performed only after the operating condition of asymmetry may occur, so that the controller can be prevented from performing unnecessary detection, and computing power is saved.

In addition to determining whether three-phase asymmetry occurs in the power grid by comparing the valid voltage values of the two phase alternating currents in the three phase alternating currents, a valid voltage value of one phase alternating current in the three phase alternating currents may be selected and compared with a reference value, to determine whether three-phase asymmetry occurs in the power grid.

In an embodiment, the controller 110 is configured to control, in a DPWM modulation scheme, switching transistors in three power conversion modules to turn on/off, to implement power conversion between a direct current and three phase alternating currents; and the controller 110 is further configured to: when an absolute value of a difference between a valid voltage value of one phase alternating current in the three phase alternating currents in a preset cycle and a reference value does not exceed a preset threshold, if a temperature of any power conversion module in the three power conversion modules exceeds a first temperature threshold corresponding to the any power conversion module, reduce an output current of the phase; or the controller 110 is further configured to: when an absolute value of a difference between a valid voltage value of one phase alternating current in the three phase alternating currents in a preset cycle and a reference value exceeds a preset threshold, if a temperature of the power conversion module corresponding to the one phase alternating current in the three phase alternating currents exceeds a second temperature threshold corresponding to the power conversion module, reduce an output current of the phase. In this embodiment, a manner of determining three-phase asymmetry different from that in the foregoing embodiment is used, and a derating strategy of the second temperature threshold with a lower value is also used, so that the power conversion module can also be prevented from overheating, thereby ensuring safety of the component, ensuring that the power converter smoothly passes through a period of three-phase asymmetry of the power grid, and improving an overall energy yield of the power converter throughout a full life cycle.

In an embodiment, a larger absolute value of the difference between the valid voltage value of the one phase alternating current in the three phase alternating currents in the preset cycle and the reference value indicates a larger difference between the first temperature threshold and the second temperature threshold. Similar to the principle of the foregoing embodiment, a larger absolute value of a difference between a valid voltage value of one phase alternating current in the three phase alternating currents and the reference value indicates more serious three-phase asymmetry of the power grid, and also more serious temperature raising of the power conversion module. In this case, a decrease amplitude of the temperature threshold is increased, so that the power conversion module can be better prevented from overheating in advance, thereby ensuring safety of the component, ensuring that the power converter smoothly passes through a period of three-phase asymmetry of the power grid, and improving an overall energy yield of the power converter throughout a full life cycle.

Similarly, the first temperature threshold may also be a fixed value or a variable value.

In an embodiment, the reference value is an average value of valid voltage values of the three phase alternating currents. In some cases, voltages of the power grid may change in a balanced manner, which does not cause three-phase asymmetry of the power grid, but may cause the valid voltage values of the three phase alternating currents output by the power converter change. Therefore, using the average value of the valid voltage values of the three phase alternating currents as the reference value can effectively reduce misjudgment of the operating condition of three-phase asymmetry.

In an embodiment, the determining whether the three phase alternating currents are balanced based on the absolute value of the difference between the valid voltage value of the one phase alternating current in the three phase alternating currents in the preset cycle and the reference value may be specifically implemented in the following manner: If an absolute value of a difference between duration in which a switching transistor in the power conversion module corresponding to any phase alternating current in the three phase alternating currents keeps in a clamping state in a preset cycle and a time reference value is greater than a preset time threshold, it is considered that three-phase asymmetry occurs.

In an embodiment, the preset cycle may also be an integer multiple of a half cycle of one phase alternating current in the three phase alternating currents.

It should be understood that, when specifically controlling the three power conversion modules, the controller 110 may determine, based on related data in the foregoing embodiments, whether three-phase asymmetry occurs by using methods such as linear fitting calculation, table lookup interpolation calculation, and a positive correlation function relationship, and then perform corresponding control on the three power conversion modules.

In an embodiment, only after a negative-sequence voltage component of the three phase alternating currents is greater than a preset component threshold, the controller 110 starts to determine whether three-phase asymmetry occurs, so as to perform corresponding control.

The following describes the two types of control strategies in the foregoing embodiments in a form of flowchart.

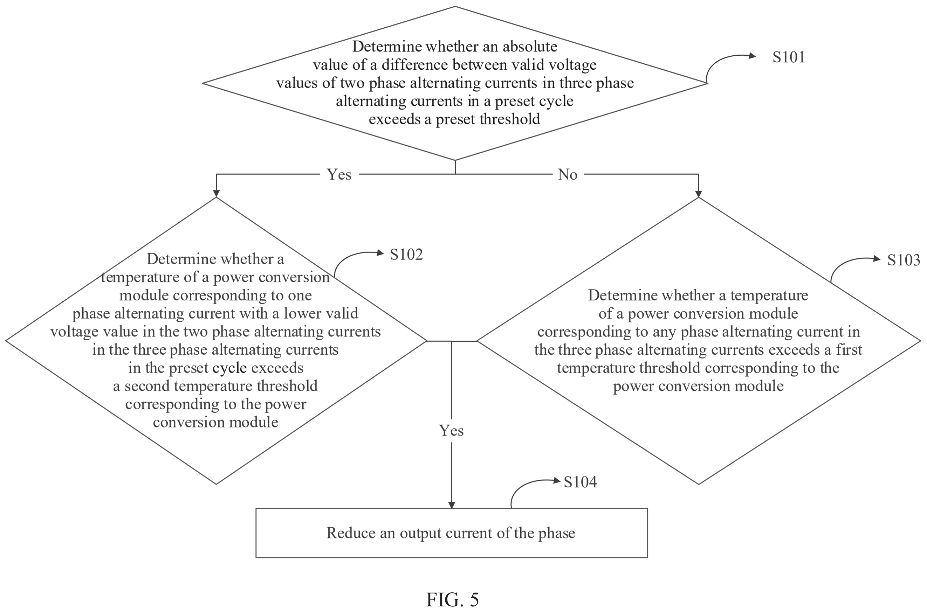

Refer to FIG. 5. The controller 110 performs the following steps:

S101: Determine whether the absolute value of the difference between the valid voltage values of the two phase alternating currents in the three phase alternating currents in the preset cycle exceeds the preset threshold.

If yes, S102 is performed: Determine whether the temperature of the power conversion module corresponding to the one phase alternating current with the lower valid voltage value of the two phase alternating currents in the three phase alternating currents in the preset cycle exceeds the second temperature threshold corresponding to the power conversion module; or if no, S103 is performed: Determine whether the temperature of the power conversion module corresponding to the any phase alternating current in the three phase alternating currents exceeds the first temperature threshold corresponding to the power conversion module.

After a result of determining S102 is yes, or after a result of determining S103 is yes, S104 is performed: reduce the output current of the phase.

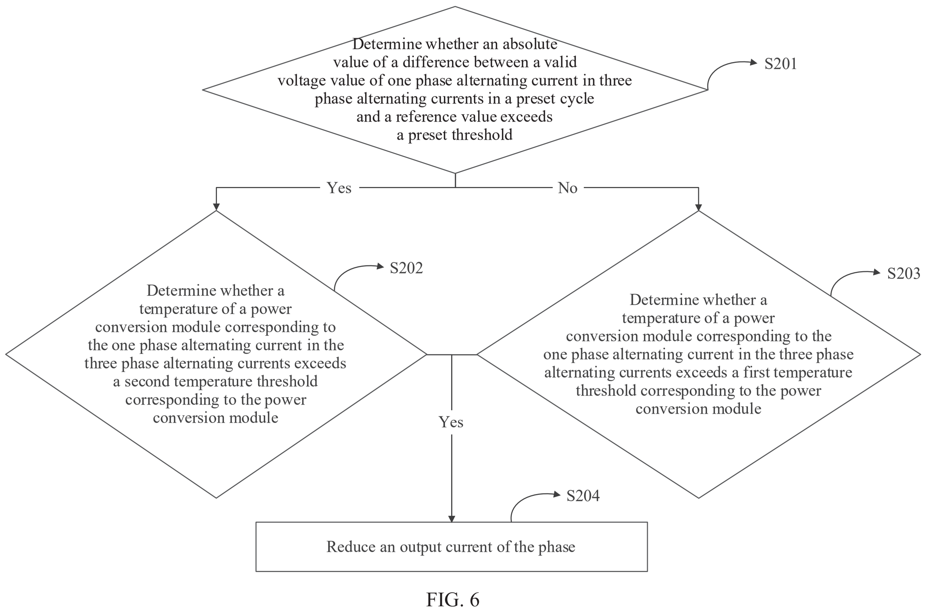

In another embodiment, refer to FIG. 6. The controller 110 performs the following steps:
S201: Determine whether the absolute value of the difference between the valid voltage value of the one phase alternating current in the three phase alternating currents in the preset cycle and the reference value exceeds the preset threshold.

If yes, S202 is performed: Determine whether the temperature of the power conversion module corresponding to the one phase alternating current in the three phase alternating currents exceeds the second temperature threshold corresponding to the power conversion module; or if no, S203 is performed: Determine whether the temperature of the power conversion module corresponding to the one phase alternating current in the three phase alternating currents exceeds the first temperature threshold corresponding to the power conversion module.

After a result of determining S202 is yes, or after a result of determining S203 is yes, S204 is performed: reduce the output current of the phase.

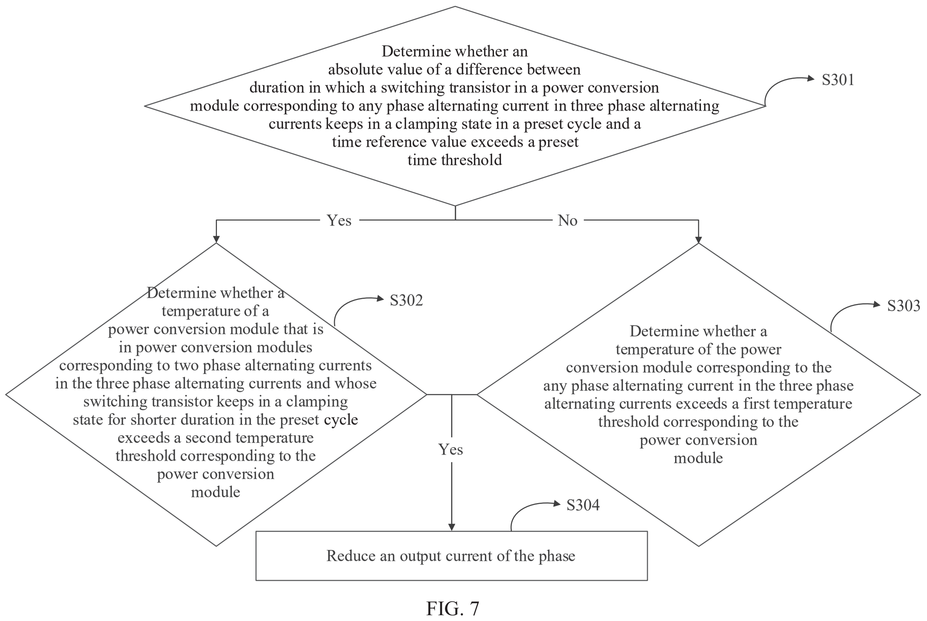

In another embodiment, refer to FIG. 7. The controller 110 performs the following steps:

S301: Determine whether the absolute value of the difference between the duration in which the switching transistor in the power conversion module corresponding to the any phase alternating current in the three phase alternating currents keeps in the clamping state in the preset cycle and the time reference value exceeds the preset time threshold.

If yes, S302 is performed: Determine whether the temperature of the power conversion module that is in the power conversion modules corresponding to the two phase alternating currents in the three phase alternating currents and whose switching transistor keeps in the clamping state for shorter duration in the preset cycle exceeds the second temperature threshold corresponding to the power conversion module; or if no, S303 is performed: Determine whether the temperature of the power conversion module corresponding to the any phase alternating current in the three phase alternating currents exceeds the first temperature threshold corresponding to the power conversion module.

After a result of determining S302 is yes, or after a result of determining S303 is yes, S304 is performed: reduce the output current of the phase.

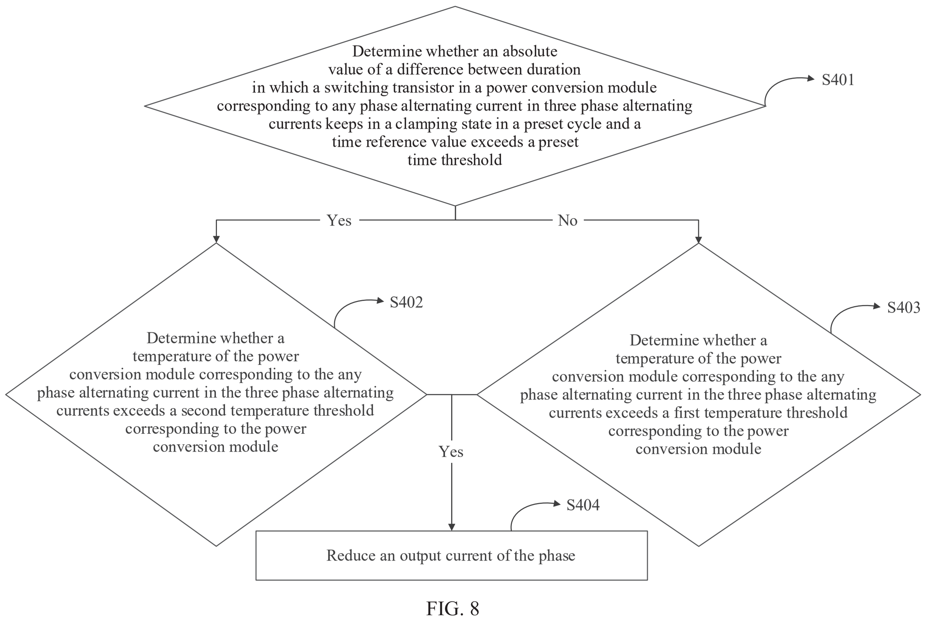

In another embodiment, refer to FIG. 8. The controller 110 performs the following steps:

S401: Determine whether the absolute value of the difference between the duration in which the switching transistor in the power conversion module corresponding to the any phase alternating current in the three phase alternating currents keeps in the clamping state in the preset cycle and the time reference value exceeds the preset time threshold.

If yes, S402 is performed: Determine whether the temperature of the power conversion module corresponding to the any phase alternating current exceeds the second temperature threshold corresponding to the power conversion module; or if no, S403 is performed: Determine whether the temperature of the power conversion module corresponding to the any phase alternating current in the three phase alternating currents exceeds the first temperature threshold corresponding to the power conversion module.

After a result of determining S402 is yes, or after a result of determining S403 is yes, S404 is performed: reduce the output current of the phase.

In the foregoing embodiments, before performing S101, S201, S301, or S401, the controller 110 may first determine whether a negative-sequence component of the three phase alternating currents is greater than a preset component threshold, and start to perform S101, S201, S301, or S401 only when the negative-sequence component exceeds the negative-sequence component threshold.

For specific execution and execution effect of the foregoing embodiments related to the control procedure, refer to the foregoing embodiments related to the inverter 100. Details are not described again.

The foregoing disclosed preferred embodiments of this application are merely intended to help describe this application. Preferred embodiments do not describe all details in detail, and this application is not limited to the specific implementations. Apparently, many modifications and changes may be made according to the content of embodiments of this application. These embodiments are selected and described in detail in this application, to better explain the principle and actual application of this application, so that a person skilled in the art can well understand and use this application. This application is limited only by the claims and their full scope and equivalents.

## Claims

1. A power converter, comprising a controller and three power conversion modules, wherein
the controller is configured to:
control, in a discontinuous pulse width modulation, DPWM, scheme, switching transistors in the three power conversion modules to turn on/off, to implement power conversion between a direct current and three phase alternating currents; and
when an absolute value of a difference between valid voltage values of two phase alternating currents in the three phase alternating currents in a preset cycle does not exceed a preset threshold, if a temperature of a power conversion module corresponding to any phase alternating current in the three phase alternating currents exceeds a first temperature threshold corresponding to the power conversion module, reduce an output current of the phase; or
when an absolute value of a difference between valid voltage values of two phase alternating currents in the three phase alternating currents in a preset cycle exceeds a preset threshold, if a temperature of a power conversion module corresponding to one phase alternating current with a lower valid voltage value in the two phase alternating currents in the three phase alternating currents in the preset cycle exceeds a second temperature threshold corresponding to the power conversion module, reduce an output current of the phase, wherein
the second temperature threshold is less than the first temperature threshold.

2. The power converter according to claim 1, wherein the first temperature threshold is a fixed value, the second temperature threshold is a variable value, and a larger absolute value of the difference between the valid voltage values of the two phase alternating currents in the three phase alternating currents in the preset cycle indicates a larger difference between the first temperature threshold and the second temperature threshold.

3. The power converter according to claim 1, wherein both the first temperature threshold and the second temperature threshold are fixed values.

4. The power converter according to any one of claims 1 to 3, wherein the two phase alternating currents in the three phase alternating currents are one phase alternating current with a maximum valid voltage value and one phase alternating current with a minimum valid voltage value in the preset cycle.

5. The power converter according to any one of claims 1 to 4, wherein the preset cycle is any positive integer multiple cycle of a shortest time cycle covering half a cycle of each phase alternating current in the three phase alternating currents.

6. The power converter according to any one of claims 1 to 5, wherein when the absolute value of the difference between the valid voltage values of the two phase alternating currents in the three phase alternating currents in the preset cycle exceeds the preset threshold, if the temperature of the power conversion module corresponding to the one phase alternating current with the lower valid voltage value of the two phase alternating currents in the preset cycle exceeds the second temperature threshold corresponding to the power conversion module, reducing the output current of the phase is specifically:
after a negative-sequence voltage component of the three phase alternating currents is greater than a preset component threshold, when the absolute value of the difference between the valid voltage values of the two phase alternating currents in the three phase alternating currents in the preset cycle exceeds the preset threshold, if the temperature of the power conversion module corresponding to the one phase alternating current with the lower valid voltage value of the two phase alternating currents in the preset cycle exceeds the second temperature threshold corresponding to the power conversion module, reducing the output current of the phase.

7. A power converter, comprising a controller and three power conversion modules, wherein
the controller is configured to:
control, in a DPWM scheme, switching transistors in the three power conversion modules to turn on/off, to implement power conversion between a direct current and three phase alternating currents; and
when an absolute value of a difference between duration in which switching transistors in a power conversion modules corresponding to two phase alternating currents in the three phase alternating currents keep in a clamping state in a preset cycle does not exceed a preset time threshold, if a temperature of a power conversion module corresponding to any phase alternating current in the three phase alternating currents exceeds a first temperature threshold corresponding to the power conversion module, reduce an output current of the phase; or
when an absolute value of a difference between duration in which switching transistors in the power conversion modules corresponding to two phase alternating currents in the three phase alternating currents keep in a clamping state in a preset cycle exceeds a preset time threshold, if a temperature of power conversion module that is in the power conversion modules corresponding to the two phase alternating currents in the three phase alternating currents and whose switching transistor keeps in a clamping state for shorter duration in the preset cycle exceeds a second temperature threshold corresponding to the power conversion module, reduce an output current of the phase, wherein
the second temperature threshold is less than the first temperature threshold.

8. The power converter according to claim 7, wherein the first temperature threshold is a fixed value, the second temperature threshold is a variable value, and a larger absolute value of the difference between the duration in which the switching transistors in the power conversion modules corresponding to the two phase alternating currents in the three phase alternating currents keep in the clamping state in the preset cycle indicates a larger difference between the first temperature threshold and the second temperature threshold.

9. The power converter according to claim 7 or 8, wherein the power conversion modules corresponding to the two phase alternating currents in the three phase alternating currents are one power conversion module whose switching transistor keeps in a clamping state for longest duration and one power conversion module whose switching transistor keeps in a clamping state for shortest duration in the preset cycle.

10. A power converter, comprising a controller and three power conversion modules, wherein
the controller is configured to:
control, in a DPWM scheme, switching transistors in the three power conversion modules to turn on/off, to implement power conversion between a direct current and three phase alternating currents; and
when an absolute value of a difference between a valid voltage value of one phase alternating current in the three phase alternating currents in a preset cycle and a reference value does not exceed a preset threshold, if a temperature of a power conversion module corresponding to the one phase alternating current in the three phase alternating currents exceeds a first temperature threshold corresponding to the power conversion module, reduce an output current of the phase; or
when an absolute value of a difference between a valid voltage value of one phase alternating current in the three phase alternating currents in a preset cycle and a reference value exceeds a preset threshold, if a temperature of a power conversion module corresponding to the one phase alternating current in the three phase alternating currents exceeds a second temperature threshold corresponding to the power conversion module, reduce an output current of the phase, wherein
the second temperature threshold is less than the first temperature threshold.

11. The power converter according to claim 10, wherein the first temperature threshold is a fixed value, the second temperature threshold is a variable value, and a larger absolute value of the difference between the valid voltage value of the one phase alternating current in the three phase alternating currents in the preset cycle and the reference value indicates a larger difference between the first temperature threshold and the second temperature threshold.

12. The power converter according to claim 10, wherein both the first temperature threshold and the second temperature threshold are fixed values.

13. The power converter according to any one of claims 10 to 12, wherein the reference value is an average value of valid voltage values of the three phase alternating currents.

14. A power converter, comprising a controller and three power conversion modules, wherein
the controller is configured to:
control, in a DPWM scheme, switching transistors in the three power conversion modules to turn on/off, to implement power conversion between a direct current and three phase alternating currents; and
when an absolute value of a difference between duration in which a switching transistor in a power conversion module corresponding to any phase alternating current in the three phase alternating currents keeps in a clamping state in a preset cycle and a time reference value does not exceed a preset time threshold, if a temperature of a power conversion module corresponding to the any phase alternating current in the three phase alternating currents exceeds a first temperature threshold corresponding to the power conversion module, reduce an output current of the phase; or
when an absolute value of a difference between duration in which a switching transistor in a power conversion module corresponding to any phase alternating current in the three phase alternating currents keeps in a clamping state in a preset cycle and a time reference value exceeds a preset time threshold, if a temperature of a power conversion module corresponding to the any phase alternating current exceeds a second temperature threshold corresponding to the power conversion module, reduce an output current of the phase, wherein
the second temperature threshold is less than the first temperature threshold.

15. The power converter according to claim 14, wherein the first temperature threshold is a fixed value, the second temperature threshold is a variable value, and a larger absolute value of the difference between the duration in which the switching transistor in the power conversion module corresponding to the any phase alternating current in the three phase alternating currents keeps in the clamping state in the preset cycle and the time reference value indicates a larger difference between the first temperature threshold and the second temperature threshold.
